# EUROPEAN PATENT SPECIFICATION

(11) **EP 2 597 551 B1**
(45) Date of publication and mention of the grant of the patent: **29.04.2020**
(21) Application number: 12193942.5
(22) Date of filing: 23.11.2012
(51) Int. Cl.: G06F 3/041

(54) **Touch panel having border without color difference and manufacturing method thereof**
Berührungstafel mit Umrandung ohne Farbunterschied und Herstellungsverfahren dafür
Panneau tactile comprenant un bord sans différence de couleur et son procédé de fabrication

(30) Priority: 25.11.2011 TW 100143443
(43) Date of publication of application: 29.05.2013
(73) Proprietor: Wistron Corporation, New Taipei City, (Postal Code: 221) (TW)
(72) Inventor: Wang, Kuei-Ching, 325 TAOYUAN COUNTY (TW); Lin, Ta-Hu, 112 TAIPEI CITY (TW)
(74) Representative: Straus, Alexander

(56) References cited:
- EP-A1- 2 306 278
- JP-A- 2009 288 902
- JP-A- 2010 039 621
- JP-A- 2011 192 124

## Description

### BACKGROUND OF THE INVENTION

### Field of Invention

The invention relates to an input panel and a manufacturing method thereof and, in particular, to a touch panel and a manufacturing method thereof.

### Related Art

Various kinds of touch input devices have been widely applied to many electronic products, such as mobile phones and tablet computers are mostly configured with a touch panel as their input device. A user can simply use his hand to touch a surface of the touch panel directly to input a command, or move his hand on the surface to control a cursor or input words by writing. Besides, the display panel cooperated with the touch panel can show virtual buttons, so that the user can click the virtual buttons to input the corresponding words.

In general, the touch panels include resistive, capacitive, ultrasonic and infrared types. In practice, the resistive touch panel is the most popular one. The designs of the resistive touch panel mainly include four-wire, five-wire, six-wire, eight-wire resistive touch panels. The four-wire touch panel, which is cheaper and well developed, is widely applied to the productions and applications.

The touch panel includes a substrate, a circuit layer disposed on the substrate, an insulating layer and a flexible printed circuit pattern. However, the substrate is usually made of a transparent material, such as glass, and an adhesive disposed at the periphery of the substrate is also made of a transparent material. Accordingly, the insulating layer and the flexible printed circuit pattern can not be blocked from the view side, so that the user may see the insulation layer and the flexible printed circuit board pattern from the substrate side. In order to solve this inaesthetic issue, the conventional art needs to add a border around the housing in which the touch panel is assembled. Although the border can cover and block the inaesthetic part, such as the insulation layer and the flexible printed circuit board pattern, an additional drawback that the housing must provide some extra spaces for assembling the border occurs.

Japanese Patent Publication JP2011 192124A discloses an alternative attempt to provide a touch panel that prevents a reduction in transmittance of a transparent conductive film due to a light shielding print layer, however, the insulating layer and the flexible printed circuit pattern cannot be blocked from the view side, so that the user may see the insulation layer and the flexible printed circuit board pattern from the substrate side.

Therefore, it is an important subject of the present invention to provide a touch panel and a manufacturing method thereof, in which the border circuit will not be seen by the user.

### SUMMARY OF THE INVENTION

In view of the foregoing subject, an objective of the invention is to provide a touch panel and a manufacturing method thereof in which the border circuit can be prevented from being exposed visually.

Another objective of the present invention is to provide a novel touch panel design, so that the substrate of the touch panel can possess multiple functions including decorating and shielding the internal circuits, protecting the inside components, and/or providing complete touch control function.

To achieve the above objectives, the present invention discloses a touch panel including a substrate, a transparent conductive layer, a shielding decoration layer, a transparent conductive connecting layer and an opaque conductive layer. The transparent conductive layer is disposed on the substrate. The shielding decoration layer is disposed on the substrate and the transparent conductive layer. The transparent conductive connecting layer is disposed on the transparent conductive layer and the shielding decoration layer, extends from the transparent conductive layer to the shielding decoration layer, and exceeds an edge of the transparent conductive layer. The opaque conductive layer is disposed on the shielding decoration layer and the transparent conductive connecting layer, and is not disposed on the transparent conductive layer.

In one embodiment, the opaque conductive layer is disposed on the shielding decoration layer, extends toward the transparent conductive layer but does not reach the edge of the transparent conductive layer.

In one embodiment, the material of the shielding decoration layer includes any kind of ink possessing insulation property, the material of the transparent conductive connecting layer includes a conductive polymer or indium tin oxide, and the material of the opaque conductive layer includes silver paste, copper, molybdenum (Mo), or aluminum.

In one embodiment, the color of the shielding decoration layer is not corresponding to the color of the transparent conductive connecting layer, and can be any color.

In one embodiment, the transparent conductive layer is defined with a touch sensing circuit.

In one embodiment, the touch panel further includes a pin and a conductive adhesive adhering the pin and the opaque conductive layer.

In the invention, the shielding decoration layer has an opening located on the transparent conductive layer, and the transparent conductive connecting layer is disposed in the opening. The touch panel further includes another shielding decoration layer disposed on the transparent conductive connecting layer to cover the opening.

In one embodiment, the touch panel is of a resistive touch panel or a capacitive touch panel.

In one embodiment, the substrate has both of a touch sensing function and a protection function. In other words, after the touch panel is manufactured completely, the substrate has both of a touch sensing function and a protection function for replacing a cover.

In one embodiment, the substrate is a transparent plastic substrate, a transparent glass substrate, a polyimide (PI) substrate, or a PET (Polyethylene terephthalate) substrate.

As mentioned above, the present invention configures the transparent conductive connecting layer extending from the transparent conductive layer to the shielding decoration layer and exceeding the edge of the transparent conductive layer. Moreover, the opaque conductive layer is disposed on the transparent conductive connecting layer and is not disposed on the transparent conductive layer. This configuration can effectively avoid the exposedness of the border circuit, so that the user can not view the border circuit. Besides, only a single substrate is used in the touch panel and its manufacturing method of the invention, so that the additional transparent adhesive or cover lens is unnecessary, which can make the products become thinner.

More advantageously, the substrate of the touch panel of the present invention has multiple functions, which is not available in the conventional art. The multiple functions include: a decoration function for decorating and shielding the internal circuits, a protection function for protecting the conductive layer and the internal circuits, and a complete touch control function provided by configuring the complete conductive layer. In brief, the conventional art needs additional manufacturing processes and materials to form a cover for providing the desired decoration and protection functions; on the contrary, the novel design of this invention can easily carry out the concept of multi-function substrate. Since the substrate of this invention has improved functions, it is possible to omit another substrate in the panel. Thus, the additional attaching or assembling steps for providing the desired decoration purpose can be reduced, so the invention is suitable for modulation processes and can decrease the manufacturing cost.

### BRIEF DESCRIPTION OF THE DRAWINGS

The invention will become more fully understood from the detailed description and accompanying drawings, which are given for illustration only, and thus are not limitative of the present invention, and wherein:
FIGS. 1A to 1C are schematic diagrams of a touch panel;
FIGS. 2A is a schematic diagrams of another touch panel;
FIG. 2B is a schematic diagram of a preferred embodiment of the invention;
FIGS. 3A is a schematic diagrams of a touch panel;
FIG. 3B is a schematic diagram of another preferred embodiment of the invention.

### DETAILED DESCRIPTION OF THE INVENTION

The present invention will be apparent from the following detailed description, which proceeds with reference to the accompanying drawings, wherein the same references relate to the same elements.

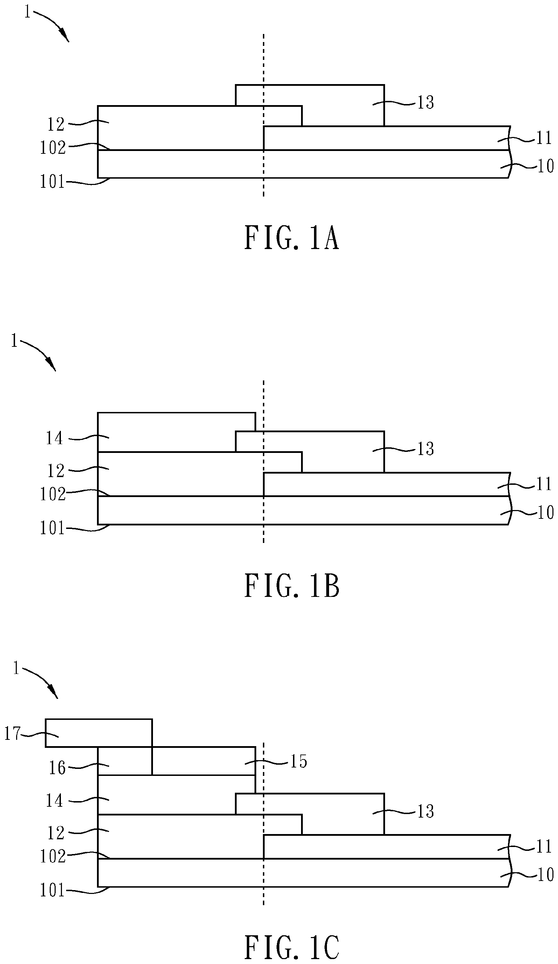

As shown in FIG. 1A, the touch panel 1 includes a substrate 10, a transparent conductive layer 11, a shielding decoration layer 12 and a transparent conductive connecting layer 13. The transparent conductive layer 11 is disposed on the substrate 10, and the shielding decoration layer 12 is disposed on the substrate 10 and the transparent conductive layer 11.

For example, the transparent conductive layer 11, the shielding decoration layer 12 and the transparent conductive connecting layer 13 can be formed on the substrate 10 by the following steps of: forming the transparent conductive layer 11 on the opaque components for the external connection also do not exceed the edge of the transparent conductive layer 11. Therefore, there is no opaque conductive layer 14 or other opaque components for the external connection disposed on the transparent conductive layer 11. The opaque components in the area of the transparent conductive layer 11 of the touch panels 1 and 1a cannot be seen by the user through the exterior surface 101. Besides, since the transparent conductive connecting layer 13 is transparent, the color of the shielding decoration layer need not be corresponding to the color of the transparent conductive connecting layer 13. In other words, the transparent conductive connecting layer 13 can be any color, not affecting the view of the user. Furthermore, the shielding decoration layer 12 can shield the border circuit, such as the circuit disposed on the opaque conductive layer 14, so that the shielding decoration layer 12 will be seen while the user looks toward the border circuit. As a result, the user also will not see the color difference between the border circuit and other components so that the touch panel with a border circuit without color difference is produced.

In all of the above embodiments, the touch panel can be of a resistive touch panel or a capacitive touch panel. The capacitive touch panel, for example, is a projective capacitive touch panel.

In all of the above embodiments, the touch panel 1 or 1a can be a nonflexible touch panel or a flexible touch panel, and the touch panel 1 or 1a may include a single substrate. Regarding to the touch panels 1 and 1a, an additional substrate is not necessary, so that the entire thickness thereof can be thinner, thereby improving the entire transmission. Besides, since only one single substrate is configured, the process for laminating two substrates in the prior art is not needed. This feature can not only avoid the lower yield issue caused by the laminating process, but also omit the undesired oxidation. The pin 17 may be a pin of a flexible printed circuit (FPC) board. The pin 17 is fixed on the opaque conductive layer 14 and adjacent to the insulating layer 15 by the conductive adhesive 16 so that the pin 17 is electrically connected with the transparent conductive layer 11 through the conductive adhesive 16 and the opaque conductive layer 14. The conductive adhesive 16 can be an anisotropic conductive film (ACF) or an anisotropic conductive paste (ACP).

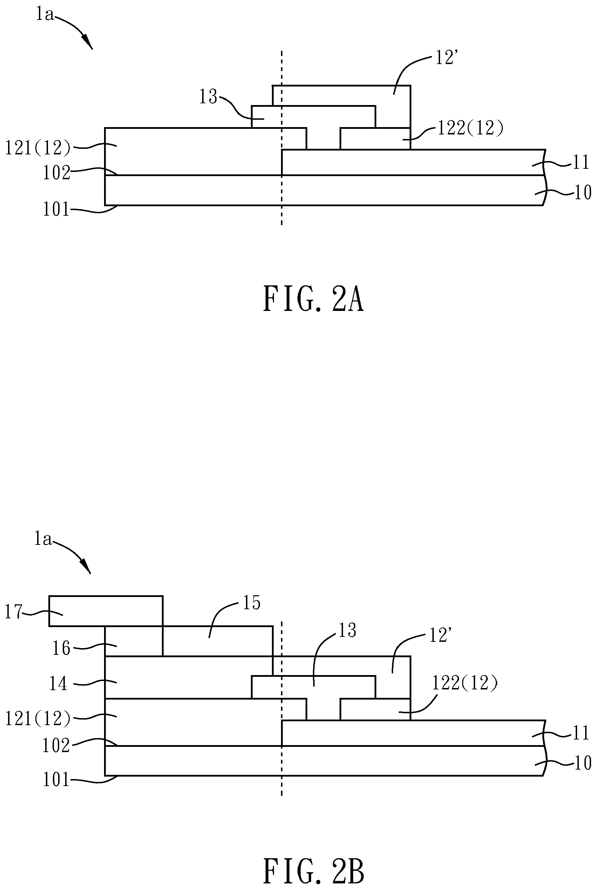

As shown in FIG. 2A, the transparent conductive layer 11 is disposed on the substrate 10. The shielding decoration layer 12 is disposed on the substrate 10 and the transparent conductive layer 11. The shielding decoration layer 12 includes an opening, a first portion 121 and a second portion 122. The opening is located on the transparent conductive layer 11 and between the first and second portions 121 and 122. The transparent conductive connecting layer 13 is disposed into the opening and thus contacts with the transparent conductive layer 11. The structures and fabrication processes of the transparent conductive layer 11, the shielding decoration layer 12 and the transparent conductive connecting layer 13 are similar those described in FIG. 1A. Besides, another shielding decoration layer 12' is formed over the opening of the shielding decoration layer 12. The shielding decoration layer 12' is at least disposed above the transparent conductive connecting layer 13 to cover the opening of the shielding decoration layer 12 for preventing the light coming from a side of the touch panel 1 from going out of the other side of the touch panel 1 through the opening.

In this embodiment, the shielding decoration layer 12' is disposed on the shielding decoration layer 12 and the transparent conductive connecting layer 13. A side of the shielding decoration layer 12' extends toward the first portion 121 and exceeds the edge of the transparent conducive layer 11 but does not exceed the edge of the transparent conductive connecting layer 13 so as to define the position of the following opaque conductive layer 14. The other side of the shielding decoration layer 12' extends toward the second portion 122, and doesn't exceed the edge of the shielding decoration layer 12.

The color of the shielding decoration layers 12 is the same as or similar to that of the shielding decoration layers 12' so as to prevent the user from seeing the opening of the shielding decoration layer 12 or perceiving the color difference between the transparent conductive connecting layer 13 and the shielding decoration layer 12. Otherwise, the shielding decoration layers 12 and 12' can have different colors and/or brightness. In practice, the opening of the shielding decoration layer 12 can be designed as a particular pattern, such as a name or a mark of a product, or that of a firm, and thus the name or the mark can be presented by the shielding decoration layer 12'. The name or mark will be more highlighting when the contrast between the shielding decoration layers 12 and 12' is more obvious.

As shown in FIG. 2B, the opaque conductive layer 14 is disposed on the shielding decoration layer 12 and the transparent conductive connecting layer 13. That is to say, the opening between the first portion 121 and the second portion 122 is filled with the transparent conductive connecting layer 13, and then the opaque conductive layer 14 is formed on the shielding decoration layer 12 and the transparent conductive connecting layer 13. The structure and the manufacturing method of the opaque conductive layer 14 are similar to the case in FIG. 1B. In this embodiment, the opaque conductive layer 14 is formed adjacent to the shielding decoration layer 12'. Even if the opaque conductive layer 14 is not precisely formed adjacent to the shielding decoration layer 12', for example, a part of the opaque conductive layer 14 is formed on the shielding decoration layer 12' or a gap is formed between the opaque conductive layer 14 and the shielding decoration layer 12', these drawbacks will be covered by the shielding decoration layers 12 and 12' and thus may still not easily observed by the user.

The formation sequence of the shielding decoration layer 12' and the opaque conductive layer 14 can be changed. For example, referring to FIG. 2A, the transparent conductive layer 11 is disposed on the substrate 10. The shielding decoration layer 12 is disposed on the substrate 10 and the transparent conductive layer 11. The shielding decoration layer 12 includes the opening, the first portion 121 and the second portion 122. The opening is located on the transparent conductive layer 11 and between the first and second portions 121 and 122. The transparent conductive connecting layer 13 is filled into the opening and thus contacts with the transparent conductive layer 11. At this time, the shielding decoration layer 12' is not formed. Next, as shown in FIG. 2B, the opaque conductive layer 14 is formed on the shielding decoration layer 12 and the transparent conductive connecting layer 13, and then the shielding decoration layer 12' is formed on the opening of the shielding decoration layer 12. At least a part of the shielding decoration layer 12' is disposed on the transparent conductive connecting layer 13 to cover the opening of the shielding decoration layer 12. In this embodiment, the shielding decoration layer 12' is formed adjacent to the opaque conductive layer 14.

Subsequently, similar to the case in FIG. 1C, the insulating layer 15 is also disposed on the opaque conductive layer 14, and the conductive adhesive 16 adheres the pin 17 and the opaque conductive layer 14.

Since the opaque conductive layer 14 is disposed on the shielding decoration layer 12 and doesn't exceed the edge of the transparent conductive layer 11, and other opaque components for the external connection also don't exceed the edge of the transparent conductive layer 11. Therefore, there is no opaque conductive layer 14 or other opaque components for the external connection disposed on the transparent conductive layer 11. The opaque components in the area of the transparent conductive layer 11 of the touch panels 1 and 1a can not be saw by the user through the exterior surface 101. Besides, since the transparent conductive connecting layer 13 is transparent, the color of the shielding decoration layer needn't corresponding to the color of the transparent conductive connecting layer 13. In other words, the transparent conductive connecting layer 13 can be any color, not affecting the view of the user. Furthermore, the shielding decoration layer 12 can shield the border circuit, such as the circuit disposed on the opaque conductive layer 14, so that the shielding decoration layer 12 will be seen while the user looks toward the border circuit. As a result, the user also won't see the color difference between the border circuit and other components so that the touch panel with a border circuit without color difference is produced.

In all of the above embodiments, the touch panel can be of a resistive touch panel or a capacitive touch panel. The capacitive touch panel, for example, is a projective capacitive touch panel.

In all of the above embodiments, the touch panel 1 or 1a can be a nonflexible touch panel or a flexible touch panel, and the touch panel 1 or 1a may includes a single substrate. Regarding to the touch panels 1 and 1a, an additional substrate is not necessary, so that the entire thickness thereof can be thinner, thereby improving the entire transmission. Besides, since only one single substrate is configured, the process for laminating two substrates in the prior art is not needed. This feature can not only avoid the lower yield issue caused by the laminating process, but also omit the laminating process as well as the necessary materials (e.g. transparent adhesive or cover lens) in this process. Accordingly, the production yield can be increased, and the manufacturing cost can be decreased.

More advantageously, the substrate of the touch panel 1 or 1a can have multiple functions. After the assembly is completed, since the substrate is located at the exterior side, and covers the border circuit, the transparent conductive layer and other components, the substrate can cooperate with the shielding decoration layer and the transparent conductive connecting layer to provide a decorative function for preventing the border circuit from being exposed, and also can protect the border circuit and the transparent conductive layer from being damaged. Furthermore, the transparent conductive layer with a larger area can be disposed on the substrate to provide a sufficient touch sensing function. Therefore, in the present invention, full of originality and foresight, simplifies the manufacturing process and provides multiple functions at the same time. Besides, the touch panel of this invention can only be configured with one substrate, the attaching step for another substrate is omitted so as to be more suitable for the module process and helpfully reduce the cost. To be noted, this invention has no other limitation except the above-mentioned concept, covering the different kinds of touch panels constructed by substantially the same or similar manufacturing processes or structures.

Besides, In all of the above embodiments, the touch panel 1 or 1a can be configured with two or more substrates. For example, the substrate 10 is connected with another substrate, and that means the touch panel includes two substrate units each having the substrate, the transparent conductive layer, the shielding decoration layer, the transparent conductive connecting layer and the opaque conductive layer. There are two examples illustrated as below.

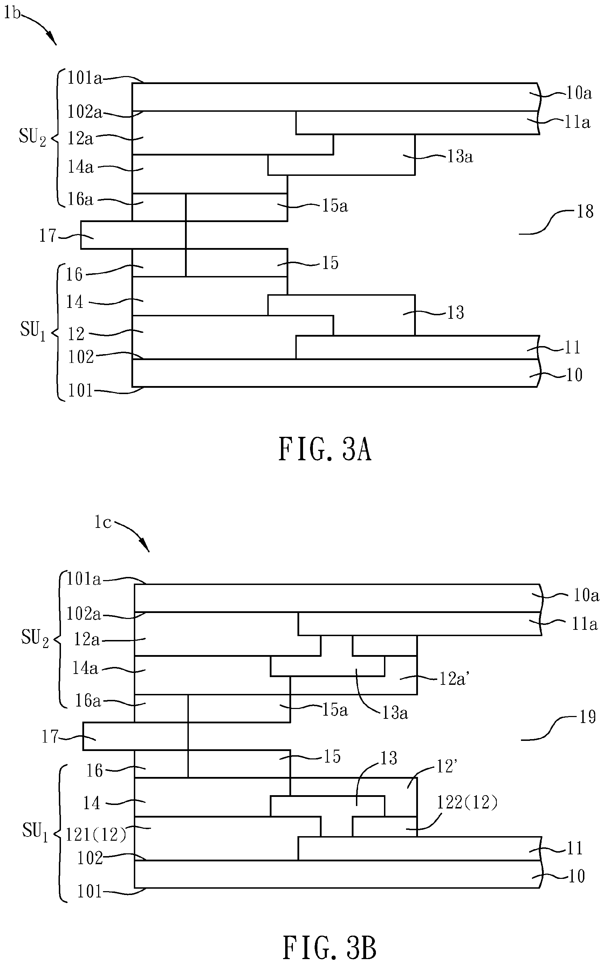

As shown in FIG. 3A, the touch panel 1b includes two substrate units SU1 and SU2, the pin 17 and a transparent insulating layer 18. The substrate unit SU1 includes the substrate 10, the transparent conductive layer 11, the shielding decoration layer 12, the transparent conductive connecting layer 13, the opaque conductive layer 14, the insulating layer 15, and the conductive adhesive 16. The substrate unit SU2 includes the substrate 10a, the transparent conductive layer 11a, the shielding decoration layer 12a, the transparent conductive connecting layer 13a, the opaque conductive layer 14a, the insulating layer 15a, and the conductive adhesive 16a. The transparent insulating layer 18 is disposed between the transparent conductive layers 11 and 11a, and can be an optical adhesive for example. Since the structures and manufacturing processes of the substrate 10a, the transparent conductive layer 11a, the shielding decoration layer 12a, the transparent conductive connecting layer 13a, the opaque conductive layer 14a, the insulating layer 15a and the conductive adhesive 16a are similar to the corresponding components as shown in FIGS. 1A to 1C, the detailed descriptions thereof are omitted here.

FIG. 3B is a schematic diagram of a touch panel 1c of another embodiment of the invention. As shown in FIG. 3B, the touch panel 1c includes two substrate units SU1 and SU2, the pin 17 and an air layer 19. The substrate unit SU1 includes the substrate 10, the transparent conductive layer 11, the shielding decoration layers 12 and 12', the transparent conductive connecting layer 13, the opaque conductive layer 14, the insulating layer 15, and the conductive adhesive 16. The substrate unit SU2 includes the substrate 10a, the transparent conductive layer 11a, the shielding decoration layers 12a and 12a', the transparent conductive connecting layer 13a, the opaque conductive layer 14a, the insulating layer 15a, and the conductive adhesive 16a. Since the structures and manufacturing processes of the substrate 10a, the transparent conductive layer 11a, the shielding decoration layer 12a, the transparent conductive connecting layer 13a, the opaque conductive layer 14a, the insulating layer 15a and the conductive adhesive 16a are similar to the corresponding components as shown in FIGS. 2A and 2B, the detailed descriptions thereof are omitted here.

Besides, as shown in FIG. 3B, the air, instead of the optical adhesive (such as the transparent insulating layer 18), is disposed between the substrates 10 and 10a, and specifically between the transparent conductive layers 11 and 11a so that the air layer 19 directly contacts with the transparent conductive layers 11 and 11a. This method can save the cost of the transparent insulating layer 18, and the attaching step for the opposite sides of the transparent insulating layer 18 can be omitted so as to simplify the manufacturing process and avoid the drawback of the reduced yield due to the inaccurate attachment. To be noted, as shown in FIG. 3A, the air layer also can replace the transparent insulating layer 18 and can be disposed between the substrates 10 and 10a.

When the touch panel 1b or 1c is a capacitive touch panel, the capacitance thereof is positively correlated with the dielectric constant between the two electrodes thereof, and the touch response time of the touch panel is also positively correlated with the capacitance. Besides, because the dielectric constant of air is less than that of the optical adhesive, the capacitance caused between the transparent conductive layers 11 and 11a, when the transparent insulating layer 18 (the optical adhesive) is replaced by the air layer, is decreased so that the touch response time of the touch panel 1c can be decreased accordingly, thereby increasing the response speed of the touch panel 1c when being touched.

Besides, similar to the embodiments as shown in FIGS. 1A to 2B, the substrate 10 or 10a as shown in FIGS. 3A and 3B is a multi-function substrate, providing the decorative and protective functions. Furthermore, the additional attaching step also can be omitted, conforming to the concept of the invention. Regarding the all disclosed embodiments, either the single substrate unit or plural substrate units can provide one or more multi-function substrates.

In summary, the present invention configures the transparent conductive connecting layer extending from the transparent conductive layer to the shielding decoration layer and exceeding the edge of the transparent conductive layer. Moreover, the opaque conductive layer is disposed on the transparent conductive connecting layer and is not disposed on the transparent conductive layer. This configuration can effectively avoid the exposedness of the border circuit, so that the user can not view the border circuit. Besides, only a single substrate is used in the touch panel and its manufacturing method of the invention, so that the additional transparent adhesive or cover lens is unnecessary, which can make the products become thinner.

More advantageously, the substrate of the touch panel of the present invention has multiple functions, which is not available in the conventional art. The multiple functions include: a decoration function for decorating and shielding the internal circuits, a protection function for protecting the conductive layer and the internal circuits, and a complete touch control function provided by configuring the complete conductive layer. In brief, the conventional art needs additional manufacturing processes and materials to form a cover for providing the desired decoration and protection functions; on the contrary, the novel design of this invention can easily carry out the concept of multi-function substrate. Since the substrate of this invention has improved functions, it is possible to omit another substrate in the panel. Thus, the additional attaching or assembling steps for providing the desired decoration purpose can be reduced, so the invention is suitable for modulation processes and can decrease the manufacturing cost.

For example, the touch panel of the invention only has a single substrate that can function as a cover lens and a touch sensor, the interior side of the substrate is configured with a transparent conductive layer, a conductive decoration pad, a shielding decoration layer and an opaque conductive layer, and the exterior side (the opposite side) without any above-mentioned layer can function as a touch input surface. When the touch panel is assembled with the housing, the components of the interior side can be disposed in the housing, and the exterior surface still faces the outside. Otherwise, the touch panel can be assembled with other electronic apparatuses, such as a display panel, and the interior side of the touch panel faces the display panel. No matter what the touch panel is assembled with, the substrate can be regarded as a cover lens for protecting the interior components of the touch panel.

Even if the touch panel includes double substrate units, the touch panel of the invention still has the advantage of decreasing the additional attaching or assembling steps.

## Claims

1. A touch panel (1a), comprising:
a substrate (10);
a transparent conductive layer (11) disposed on the substrate (10);
and **characterized by**:
a shielding decoration layer (12) disposed on the substrate (10) and the transparent conductive layer (11) and having an opening located on the transparent conductive layer (11);
a transparent conductive connecting layer (13) disposed in the opening and on the transparent conductive layer (11) and the shielding decoration layer (12), extending from the transparent conductive layer (11) to the shielding decoration layer (12), and exceeding an edge of the transparent conductive layer (11);
an opaque conductive layer (14) disposed on the shielding decoration layer (12) and the transparent conductive connecting layer (13), and not disposed on the transparent conductive layer (11); and
another shielding decoration layer (12) disposed on the transparent conductive connecting layer (13) to cover the opening.

2. The touch panel (1a) as recited in claim 1, further **characterized in that** the opaque conductive layer (14) is disposed on the shielding decoration layer (12), extends toward the transparent conductive layer (11) but does not reach the edge of the transparent conductive layer (11).

3. The touch panel (1a) as recited in claim 1 further **characterized in that** the material of the shielding decoration layer (12) includes any kind of ink possessing insulation property, the material of the transparent conductive connecting layer (13) includes a conductive polymer or indium tin oxide, and the material of the opaque conductive layer (14) includes silver paste, copper, molybdenum (Mo), or aluminum.

4. The touch panel (1a) as recited in claim 1, further **characterized in that** the color of the shielding decoration layer (12) is not corresponding to the color of the transparent conductive connecting layer (13).

5. The touch panel (1a) as recited in claim 1, further **characterized by** comprising:
a pin (17); and
a conductive adhesive (16) adhering the pin (17) and the opaque conductive layer (14).

6. The touch panel (1a) as recited in claim 1, further **characterized in that** the touch panel (1a) is of a resistive touch panel or a capacitive touch panel, and the transparent conductive layer (11) is defined with a touch sensing circuit.

7. The touch panel (1a) as recited in claim 1, further **characterized in that** the substrate (10) has both a touch sensing function and a protection function.

8. The touch panel (1a) as recited in claim 1, further **characterized in that** the substrate (10) is a transparent plastic substrate or a transparent glass substrate.

9. A manufacturing method of a touch panel (1a), comprising:
forming a transparent conductive layer (11) on a substrate (10);
and **characterized by**:
forming a shielding decoration layer (12) on the substrate (10) and the transparent conductive layer (11), wherein the shielding decoration layer (12) has an opening located on the transparent conductive layer (11);
forming a transparent conductive connecting layer (13) in the opening and on the transparent conductive layer (11) and the shielding decoration layer (12), wherein the transparent conductive connecting layer (13) extends from the transparent conductive layer (11) to the shielding decoration layer (12), and exceeds an edge of the transparent conductive layer (11);
forming an opaque conductive layer (14) on the shielding decoration layer (12) and the transparent conductive connecting layer (13), wherein the opaque conductive layer (14) is not disposed on the transparent conductive layer (11); and
forming another shielding decoration layer (12') on the transparent conductive connecting layer (13) to cover the opening.

10. The manufacturing method as recited in claim 9, further **characterized in that** the substrate (10) has both a touch sensing function and a protection function after the touch panel is manufactured completely.

11. The manufacturing method as recited in claim 9, further **characterized in that** the substrate (10) is a transparent plastic substrate or a transparent glass substrate.

## Patentansprüche

1. Touchpanel (1a), welches umfasst:
ein Substrat (10);
ein transparente leitfähige Schicht (11), die auf dem Substrat (10) angeordnet ist;
und **gekennzeichnet durch**:
eine schützende Dekorschicht (12), die auf dem Substrat (10) und der transparenten leitfähigen Schicht (11) angeordnet ist und eine Öffnung aufweist, die auf der transparenten leitfähigen Schicht (11) angeordnet ist;
eine transparente leitfähige Verbindungsschicht (13), die in der Öffnung und auf der transparenten leitfähigen Schicht (11) und der schützenden Dekorschicht (12) angeordnet ist, sich von der transparenten leitfähigen Schicht (11) zu der schützenden Dekorschicht (12) erstreckt, und über einen Rand der transparenten leitfähigen Schicht (11) geht;
eine undurchsichtige leitfähige Schicht (14), die auf der schützenden Dekorschicht (12) und der transparenten leitfähigen Verbindungsschicht (13) angeordnet ist, und nicht auf der transparenten leitfähigen Schicht (11) angeordnet ist; und
eine weitere schützende Dekorschicht (12), die auf der transparenten leitfähigen Verbindungsschicht (13) angeordnet ist, um die Öffnung zu bedecken.

2. Touchpanel (1a) nach Anspruch 1, welches weiter **dadurch gekennzeichnet ist, dass** die undurchsichtige leitfähige Schicht (14) auf der schützenden Dekorschicht (12) angeordnet ist, sich zu der transparenten leitfähigen Schicht (11) erstreckt, den Rand der transparenten leitfähigen Schicht (11) jedoch nicht erreicht.

3. Touchpanel (1a) nach Anspruch 1 weiter **dadurch gekennzeichnet, dass** das Material der schützenden Dekorschicht (12) jede Art von Tinte mit isolierenden Eigenschaften umfasst, worin das Material der transparenten leitfähigen Verbindungsschicht (13) ein leitfähiges Polymer oder Indiumzinnoxid umfasst, und worin das Material der undurchsichtigen leitfähigen Schicht (14) Silberpaste, Kupfer, Molybdän (Mo) oder Aluminium umfasst.

4. Touchpanel (1a) nach Anspruch 1, weiter **dadurch gekennzeichnet, dass** die Farbe der schützenden Dekorschicht (12) nicht der Farbe der transparenten leitfähigen Verbindungsschicht (13) entspricht.

5. Touchpanel (1a) nach Anspruch 1, weiter **dadurch gekennzeichnet, dass** dieses umfasst:
einen Fortsatz (17); und
einen leitfähigen Klebstoff (16), der dem Fortsatz (17) und der undurchsichtigen leitfähigen Schicht (14) anhaftet.

6. Touchpanel (1a) nach Anspruch 1, weiter **dadurch gekennzeichnet, dass** das Touchpanel (1a) ein widerstandsfähiges Touchpanel oder ein kapazitives Touchpanel ist, worin die transparente leitfähige Schicht (11) mit einem Berührungserfassungsschaltkreis definiert wird.

7. Touchpanel (1a) nach Anspruch 1, weiter **dadurch gekennzeichnet, dass** das Substrat (10) sowohl eine Berührungserfassungsfunktion als auch eine Schutzfunktion aufweist.

8. Touchpanel (1a) nach Anspruch 1, weiter **dadurch gekennzeichnet, dass** das Substrat (10) ein transparentes Kunststoffsubstrat oder ein transparentes Glassubstrat ist.

9. Herstellungsverfahren für ein Touchpanel (1a), welches umfasst:
Ausbilden einer transparenten leitfähigen Schicht (11) auf einem Substrat (10);
und **gekennzeichnet durch**:
Ausbilden einer schützenden Dekorschicht (12) auf dem Substrat (10) und der transparenten leitfähigen Schicht (11), worin die schützende Dekorschicht (12) eine Öffnung aufweist, die auf der transparenten leitfähigen Schicht (11) angeordnet ist;
Ausbilden einer transparenten leitfähigen Verbindungsschicht (13) in der Öffnung und auf der transparenten leitfähigen Schicht (11) und der schützenden Dekorschicht (12), worin sich die transparente leitfähige Verbindungsschicht (13) von der transparenten leitfähigen Schicht (11) zu der schützenden Dekorschicht (12) erstreckt, und über einen Rand der transparenten leitfähigen Schicht (11) geht;
Ausbilden einer undurchsichtigen leitfähigen Schicht (14) auf der schützenden Dekorschicht (12) und der transparenten leitfähigen Verbindungsschicht (13), worin die undurchsichtige leitfähige Schicht (14) nicht auf der transparenten leitfähigen Schicht (11) angeordnet ist; und
Ausbilden einer weiteren schützenden Dekorschicht (12') auf der transparenten leitfähigen Verbindungsschicht (13), um die Öffnung zu bedecken.

10. Herstellungsverfahren nach Anspruch 9, weiter **dadurch gekennzeichnet, dass** das Substrat (10) sowohl eine Berührungserfassungsfunktion als auch eine Schutzfunktion aufweist, nachdem das Touchpanel vollständig hergestellt wurde.

11. Herstellungsverfahren nach Anspruch 9, weiter **dadurch gekennzeichnet, dass** das Substrat (10) ein transparentes Kunststoffsubstrat oder ein transparentes Glassubstrat ist.

## Revendications

1. Ecran tactile (1a) comprenant :
un substrat (10) ;
une couche conductrice transparente (11) disposée sur le substrat (10) ;
et **caractérisé par** :
une couche décorative de blindage (12) disposée sur le substrat (10) et la couche conductrice transparente (11) et présentant une ouverture située sur la couche conductrice transparente (11) ;
une couche de liaison conductrice transparente (13) disposée dans l'ouverture et sur la couche conductrice transparente (11) et la couche décorative de blindage (12), s'étendant à partir de la couche conductrice transparente (11) vers la couche décorative de blindage (12) et dépassant au niveau d'un bord de la couche conductrice transparente (11) ;
une couche conductrice opaque (14) disposée sur la couche décorative de blindage (12) et la couche de liaison conductrice transparente (13) et non disposée sur la couche conductrice transparente (11) ; et
une autre couche décorative de blindage (12) disposée sur la couche de liaison conductrice transparente (13) pour recouvrir l'ouverture.

2. Écran tactile (1a) selon la revendication 1, **caractérisé en outre en ce que** la couche conductrice opaque (14) est disposée sur la couche décorative de blindage (12), s'étend vers la couche conductrice transparente (11) mais n'atteint pas le bord de la couche conductrice transparente (11).

3. Écran tactile (1a) selon la revendication 1, **caractérisé en outre en ce que** le matériau de la couche décorative de blindage (12) comprend tout type d'encre possédant une propriété d'isolation, le matériau de la couche de liaison conductrice transparente (13) comprend un polymère conducteur ou de l'oxyde d'indium-étain et le matériau de la couche conductrice opaque (14) comprend une pâte d'argent, du cuivre, du molybdène (Mo) ou de l'aluminium.

4. Écran tactile (1a) selon la revendication 1, **caractérisé en outre en ce que** la couleur de la couche décorative de blindage (12) ne correspond pas à la couleur de la couche de liaison conductrice transparente (13).

5. Écran tactile (1a) selon la revendication 1, **caractérisé en outre en ce qu'**il comprend :
une broche (17) ; et
un adhésif conducteur (16) adhérant à la broche (17) et à la couche conductrice opaque (14).

6. Écran tactile (1a) selon la revendication 1, **caractérisé en outre en ce que** l'écran tactile (1a) est un écran tactile résistif ou un écran tactile capacitif et la couche conductrice transparente (11) est définie avec un circuit de détection tactile.

7. Écran tactile (1a) selon la revendication 1, **caractérisé en outre en ce que** le substrat (10) présente à la fois une fonction de détection tactile et une fonction de protection.

8. Écran tactile (1a) selon la revendication 1, **caractérisé en outre en ce que** le substrat (10) est un substrat en plastique transparent ou un substrat en verre transparent.

9. Procédé de fabrication d'un écran tactile (1a), comprenant :
la formation d'une couche conductrice transparente (11) sur un substrat (10) ; et **caractérisé par** :
la formation d'une couche décorative de blindage (12) sur le substrat (10) et la couche conductrice transparente (11), la couche décorative de blindage (12) présentant une ouverture située sur la couche conductrice transparente (11) ;
la formation d'une couche de liaison conductrice transparente (13) dans l'ouverture et sur la couche conductrice transparente (11) et la couche décorative de blindage (12), la couche de liaison conductrice transparente (13) s'étendant depuis la couche conductrice transparente (11) jusqu'à la couche décorative de blindage (12) et dépassant au niveau d'un bord de la couche conductrice transparente (11) ;
la formation d'une couche conductrice opaque (14) sur la couche décorative de blindage (12) et la couche de liaison conductrice transparente (13), la couche conductrice opaque (14) n'étant pas disposée sur la couche conductrice transparente (11) ; et
la formation d'une autre couche décorative de blindage (12') sur la couche de liaison conductrice transparente (13) pour recouvrir l'ouverture.

10. Procédé de fabrication selon la revendication 9, **caractérisé en outre en ce que** le substrat (10) présente à la fois une fonction de détection tactile et une fonction de protection après la fabrication complète de l'écran tactile.

11. Procédé de fabrication selon la revendication 9, **caractérisé en outre en ce que** le substrat (10) est un substrat en plastique transparent ou un substrat en verre transparent.
